# EUROPEAN PATENT SPECIFICATION

(11) **EP 2 541 729 B1**
(45) Date of publication and mention of the grant of the patent: **29.06.2016**
(21) Application number: 12172527.9
(22) Date of filing: 19.06.2012
(51) Int. Cl.: H02J 7/00

(54) **Cell balance control device and cell balance controlling method**
Zellausgleichssteuerungsvorrichtung und Zellausgleichssteuerungsverfahren
Dispositif de commande de l'équilibre cellulaire et procédé de commande de l'équilibre cellulaire

(30) Priority: 29.06.2011 JP 2011144270
(43) Date of publication of application: 02.01.2013
(73) Proprietor: Kabushiki Kaisha Toyota Jidoshokki, Kariya-shi, Aichi 448-8671 (JP)
(72) Inventor: Kuraishi, Mamoru, Kariya-shi, Aichi 448-8671 (JP)
(74) Representative: TBK

(56) References cited:
- DE-A1-102006 002 414
- US-A1- 2008 211 459
- US-A1- 2011 074 354

## Description

### FIELD

The present invention relates to a cell balance control device and a cell balance controlling method for equalizing the voltages of a plurality of battery cells.

### BACKGROUND

The technology of realizing a high voltage battery by serially connecting a plurality of chargeable battery cells has been put to practical use. Recently, the battery of this type has attracted attention in, for example, implementation to an electric vehicle or a hybrid vehicle using an engine and a motor in combination.

However, when a battery is charged with a number of battery cells connected in series, the output voltage (or the remaining capacity of a battery) of each battery cell can be ununiform. When the battery is loaded into an electric vehicle etc., the discharge during the motor drive and the charge during the regeneration are repeated. Therefore, the repetition of the charging and discharging operations can cause ununiform voltages of battery cells. The ununiform voltages of the battery cells can promote the degradation of a part of the battery cells, and reduce the efficiency of the entire battery. The ununiformity of the voltages of battery cells can be caused by the production variance, the degradation with the lapse of time, etc.

One of the techniques of equalizing the voltages of battery cells is, for example, is a cell balance device which is used in a battery set as a drive power supply of a mobile object, and equalizes the remaining capacity among the cells of the battery set which is configured by serially connecting a plurality of cells (for example, refer to the patent document 1). The cell balance device includes a constant current source, a voltage sensor for detecting a voltage value of each cell, and a voltage monitor unit. The voltage monitor unit acquires the voltage value of each cell from the voltage sensor when the mobile object is in a stop state, specifies a cell to be charged for a supplementary current based on the voltage value, and supplies a current from the constant current source to the cell to be charged.

The patent documents 2 through 5 describe the related techniques.

In the conventional technology, the equalization (that is, cell balance control) of the voltages of the battery cells loaded into a mobile object is performed only when the mobile object is in a stop state. For example, in a vehicle which can be driven in an ignition turned-on state, the equalization is performed on the battery cell only in an ignition turned-off state. Therefore, for example, in the period in which the ignition turned-on state is dominant, the voltage or the remaining capacity of each battery cell indicates wide variance, thereby easily degrading the battery.
[Patent Document 1] Japanese Laid-open Patent Publication No. 2006-129577
[Patent Document 2] Japanese Laid-open Patent Publication No. 2007-244142
[Patent Document 3] Japanese Laid-open Patent Publication No. 2009-232659
[Patent Document 4] Japanese Laid-open Patent Publication No. 2001-45670
[Patent Document 5] Japanese Laid-open Patent Publication No. 2008-54416

Document US 2011/0074354 A1 discloses a capacity equalizing method for battery cells of a vehicle power source apparatus, wherein the voltage of each battery cell is detected by unit voltage detection circuits, and in case there are differences between the remaining capacities, cell capacity equalizing circuits are operated to equalize the remaining capacities between the battery cells. A timing for performing the equalization of the cell capacities of the battery block is set by a power source controller based on vehicle operating conditions and the state of the ignition switch.

Document DE 10 2006 002 414 A1 discloses a method and an apparatus for equalizing secondary cells, wherein the voltages of different secondary cells are equalized only when the ignition is off.

Document US 2008/211459 A1 discloses a cell balance control device as defined in the preamble of claim 1 and describes a battery management system for managing a battery which includes a plurality of cells. The battery management system performs a cell balancing operation by using different methods according to a driving state of the vehicle.

### SUMMARY

The present invention aims at providing a cell balance control device and a cell balance controlling method capable of increasing the number of opportunities of equalizing the voltage of a battery cell when the battery having a plurality of serially connected chargeable battery cells is loaded into a mobile object.

This object is solved by a cell balance control device as defined in claim 1.

Thus, the number of opportunities of equalizing the voltages of the battery cells increases.

### BRIEF DESCRIPTION OF DRAWINGS

FIG. 1 is a block diagram of the functions of the cell balance control device according to an embodiment of the present invention;
FIG. 2 is an example of a voltage sensor and a cell balance circuit;
FIG. 3 is another example of a voltage sensor and a cell balance circuit;
FIG. 4A is an explanatory view (1) of cell balance control;
FIG. 4B is an explanatory view (2) of cell balance control;
FIG. 4C is an explanatory view (3) of cell balance control;
FIG. 5 is a timing chart of an example of executing cell balance control;
FIG. 6 is a flowchart of an example of the process of activating cell balance control;
FIG. 7 is a flowchart of another example of the process of activating cell balance control; and
FIG. 8 is a flowchart of the process of cell balance control.

### DESCRIPTION OF EMBODIMENTS

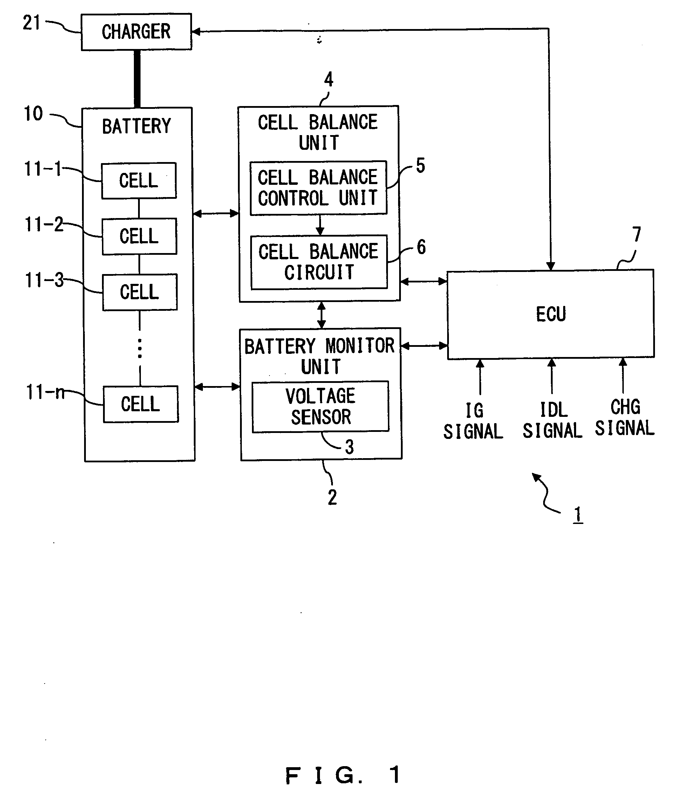

FIG. 1 is a block diagram of the functions of the cell balance control device according to an embodiment of the present invention. A cell balance control device 1 of the present invention suppresses the unbalance of the voltages of battery cells 11-1 through 11-n in a battery 10.

The battery 10 includes a plurality of chargeable battery cells 11-1 through 11-n. The battery cells 11-1 through 11-n are electrically connected in series. The number n of the serially connected battery cells is, for example, several tens through several hundreds. The battery 10 can output a large DC voltage. In the present embodiment, it is assumed that the battery 10 is loaded into a vehicle such as an electric vehicle, a hybrid vehicle using an engine and a motor in combination, a fork lift, etc.

The cell balance control device 1 includes a battery monitor unit 2, a cell balance unit 4, and an ECU 7. The battery monitor unit 2 monitors the state of the battery 10 or the battery cells 11-1 through 11-n. In addition, the battery monitor unit 2 includes a voltage sensor 3 as a voltage detection unit. The voltage sensor 3 detects the voltage of each of the battery cells 11-1 through 11-n. In this case, the voltage sensor 3 detect, for example, the output voltage of each of the battery cells 11-1 through 11-n in the state in which no load is connected to the battery cells 11-1 through 11-n. The battery monitor unit 2 also includes various sensors for detecting the state of the battery 10 in addition to the voltage sensor 3. For example, although not specifically illustrated, the battery monitor unit 2 includes a temperature sensor for detecting the temperature of the battery 10 or the battery cells 11-1 through 11-n, a sensor (for example, a voltage sensor, a current sensor, etc.) for detecting the remaining capacity of the battery 10, etc.

Upon receipt of the instruction to perform cell balance control from the ECU 7, the cell balance unit 4 suppresses the unbalance of the voltages (or remaining capacity) of the battery cells 11-1 through 11-n. In this case, the cell balance unit 4 performs the cell balance control based on the detection result by the battery monitor unit 2. Practically, the cell balance unit 4 suppresses the unbalance of the voltage of the battery cells 11-1 through 11-n based on the voltage of the battery cells 11-1 through 11-n detected by the voltage sensor 3.

The cell balance unit 4 includes a cell balance control unit 5 and a cell balance circuit 6. The cell balance control unit 5 includes, for example, a processor and memory, and controls the cell balance circuit 6. The cell balance control unit 5 can be realized by a hardware circuit (ASIC, FPGA, etc.) . The cell balance circuit 6 controls the voltage of the battery cells 11-1 through 11-n specifically according to the control of the cell balance control unit 5. An embodiment of the cell balance circuit 6 is described later.

The ECU (electronic control unit) 7 controls the operation of the cell balance unit 4 and a charger 21 while collecting the detection result by the battery monitor unit 2. In this case, the ECU 7 controls the cell balance unit 4 according to an ignition signal (IG signal), an idling stop signal (IDL signal), and a charge enabled signal (CHG signal).

The ignition signal indicates the state of the ignition of a vehicle, for example, the state in which when a user (that is, a driver of a vehicle) turns on the ignition, the on state is maintained until a turning-off operation is performed. The idling stop signal indicates whether or not the vehicle is in the idling stop state. The idling stop state can be realized, for example, based on the output of the speed sensor when the vehicle temporarily stops at an intersection etc. Otherwise, the idling stop state can be realized based on the user operation. For example, the charge enabled signal indicates whether or not the charge to the battery 10 is permitted. The charge enabled signal is controlled into the ON state when a user starts the charging operation, or when a power supply is connected to the charger 21.

The ECU 7 is realized by, for example, a configuration including a processor and memory. The ECU 7 can also perform another control related to an operation of a vehicle not only on the cell balance unit 4 and the charger 21.

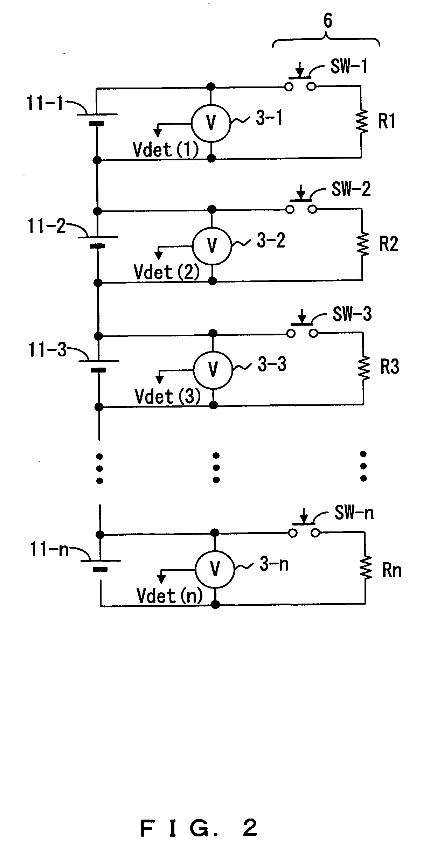

FIG. 2 is an example of the voltage sensor 3 and the cell balance circuit 6. The battery cells 11-1 through 11-n illustrated in FIG. 2 are provided in the battery 10 as described above with reference to FIG. 1.

The voltage sensor 3 includes the voltage sensors 3-1 through 3-n in this embodiment. The voltage sensors 3-1 through 3-n are respectively connected to the cathode terminals and the anode terminals of the battery cells 11-1 through 11-n. Then, the voltage sensors 3-1 through 3-n detect the output voltages det (1) through Vdet (n) of the corresponding battery cells 11-1 through 11-n.

The cell balance circuit 6 provides a resistor R and a switch SW for each of the battery cells 11-1 through 11-n. For example, a resistor R1 and a switch SW-1 are provided for the battery cell 11-1. A resistor R2 and a switch SW-2 are provided for the battery cell 11-2. Similarly, the battery cells 11-3 through 11-n are provided with the corresponding components. Then, each of the switches SW-1 through SW-n is controlled a switch control signal generated by the cell balance control unit 5.

With the configuration above, the cell balance control unit 5 refers to the output signals of the voltage sensors 3-1 through 3-n, and detects the lowest voltage (hereafter referred to as Vmin) in the battery cells 11-1 through 11-n. Then, the cell balance control unit 5 controls the cell balance circuit 6 so that the voltage of each of the battery cells 11-1 through 11-n can be the voltage Vmin. For example, if the voltage of the battery cell 11-1 is higher than the voltage Vmin, then the cell balance control unit 5 discharges the battery cell 11-1 by placing the switch SW-1 in the ON and OFF positions, thereby reducing the voltage of the battery cell 11-1 to the voltage Vmin. In this case, the current discharged from the battery cell 11-1 is consumed in the resistor R1. Therefore, by performing the operations above on the battery cells 11-1 through 11-n, the voltages of the battery cells 11-1 through 11-n are equalized at the voltage Vmin.

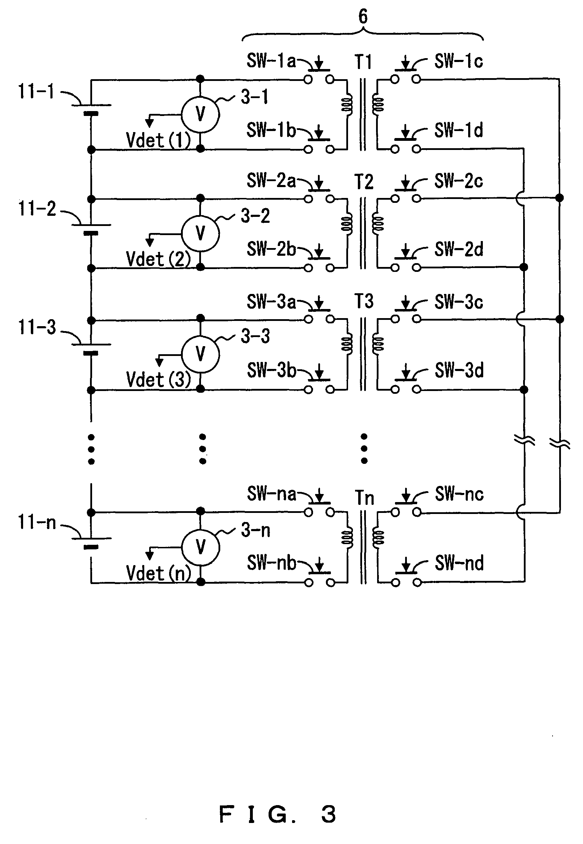

FIG. 3 is another example of the voltage sensor 3 and the cell balance circuit 6. In FIGS. 2 and 3, the voltage sensors 3-1 through 3-n are substantially the same.

The cell balance circuit 6 illustrated in FIG. 3 provides a transformer T and four switches SW for each of the battery cells 11-1 through 11-n. For example, the battery cell 11-1 is provided with a transformer T1 and switches SW-1a, SW-1b, SW-1c, and SW-1d. The battery cell 11-2 is provided with a transformer T2 and switches SW-2a, SW-2b, SW-2c, and SW-2d. The other battery cells 11-3 through 11-n are similarly provided with the respective components.

The first terminal of the first coil of the transformer T1 is electrically connected to the cathode terminal of the battery cell 11-1 through the switch SW-1a. The second terminal of the first coil of the transformer T1 is electrically connected to the anode terminal of the battery cell 11-1 through the switch SW-1b. The switch SW-1c is electrically connected to the first terminal of the second coil of the transformer T1, and the switch SW-1d is electrically connected to the second terminal of the second coil of the transformer T1. The other transformers T2 through Tn are similarly provided with the respective components. The first coil is one of the primary and secondary coils, and the second coil is the other of the primary and second coils.

Each of the switches SW-1c, SW-2c, SW-3c, ..., SW-nc is electrically connected to each other. Each of the switches SW-1d, SW-2d, SW-3d, ..., SW-nd is electrically connected to each other. Each switch SW (SW-1a through SW-1d, ..., SW-na through SW-nd) is controlled according to the switch control signal generated by the cell balance control unit 5.

With the configuration above, the cell balance unit 4 can pass a current from any battery cell to another battery cell by the cell balance control unit 5 controlling a corresponding switch SW in the cell balance circuit 6. For example, when a current is passed from the battery cell 11-1 to the battery cell 11-2, the cell balance control unit 5 appropriately controls the switches SW-1a through SW-1d, SW-2a through SW-2d. In this case, the battery cell 11-1 is discharged by controlling the switches SW-1a and SW-1b, and the energy corresponding to the discharge current is accumulated in the transformer T1. By controlling the switches SW-1c, SW-1d, SW-2c, and SW-2d, the energy accumulated in the transformer T1 is transmitted to the transformer T2. Furthermore, by controlling the switches SW-2a and SW-2b, the energy is transmitted to the battery cell 11-2, and the battery cell 11-2 is charged.

Thus, in the embodiment illustrated in FIG. 3, a specified battery cell is discharged by controlling the switch SW, and another specified battery cell is charged. The discharge/charge is equivalent to the movement of electric charge from a specified battery cell to another specified battery cell. That is, by controlling the switch SW, a current can be substantially passed from a specified battery cell to another specified battery cell. As a result, the voltage of the specified battery cell drops while the voltage of the other specified battery cell rises.

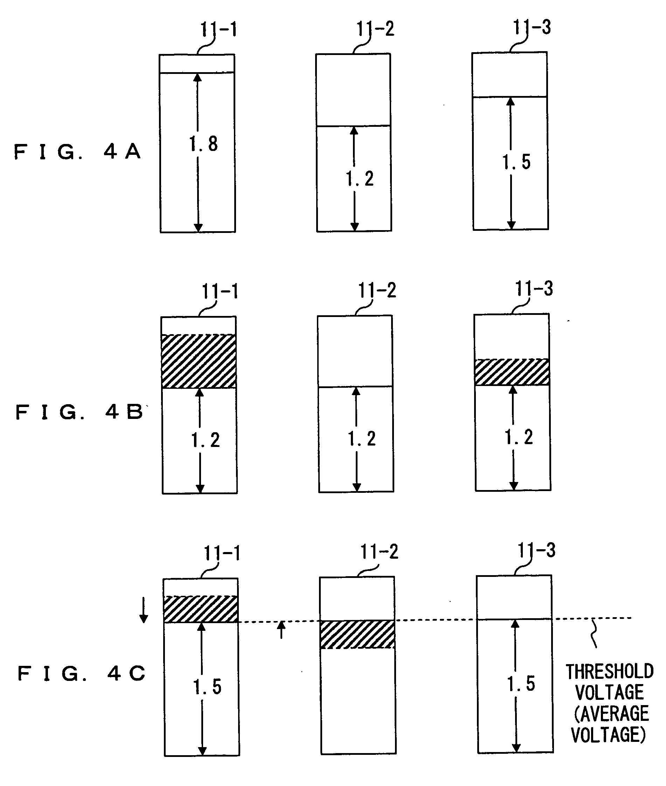

FIGS. 4A through 4C are explanatory views of cell balance control. In FIGS. 4A through 4C, it is assumed for simple explanation that the cell balance control is performed on the three battery cells 11-1 through 11-3. In this example, it is assumed that no loss is generated.

FIG. 4A indicates the state before the cell balance control. The values "1.8", "1.2", and "1.5" assigned to each of the battery cells 11-1, 11-2, and 11-3 indicate the output voltages (or remaining capacity) of the battery cell. These values are assigned for simple explanation, and do not indicate a specific physical quantity (that is, a bolt etc.).

With the configuration illustrated in FIG. 2, the cell balance control unit 5 detects the lowest voltage Vmin in the battery cells 11-1, 11-2, and 11-3. In the example illustrated in FIG. 4A, the voltage of the battery cell 11-2 is the lowest, and is Vmin = 1.2. Then, the cell balance control unit 5 reduces the voltages of the battery cells 11-1 and 11-3 to "1.2" as illustrated in FIG. 4B by controlling the switches SW-1 and SW-3. As a result, the voltages of the battery cells 11-1 through 11-3 are equalized at "1.2".

With the configuration illustrated in FIG. 3, the cell balance control unit 5 calculates, for example, the average of the voltages of the battery cells 11-1 through 11-3 as a threshold voltage. In this case, in the example illustrated in FIG. 4A, the threshold voltage (average voltage) = 1.5 is acquired. Then, the cell balance circuit 6 passes a current from a battery cell having the voltage higher than the threshold voltage to a battery cell having a voltage lower than the threshold voltage depending on the control of the cell balance control unit 5. That is, the cell balance control unit 5 passes a current from the battery cell 11-1 to the battery cell 11-2. As a result, as illustrated in FIG. 4C, the voltage of the battery cell 11-1 drops from "1.8" to "1.5", and the voltage of the battery cell 11-2 rises from "1.2" to "1.5". That is, the voltages of the battery cells 11-1 through 11-3 are equalized at "1.5".

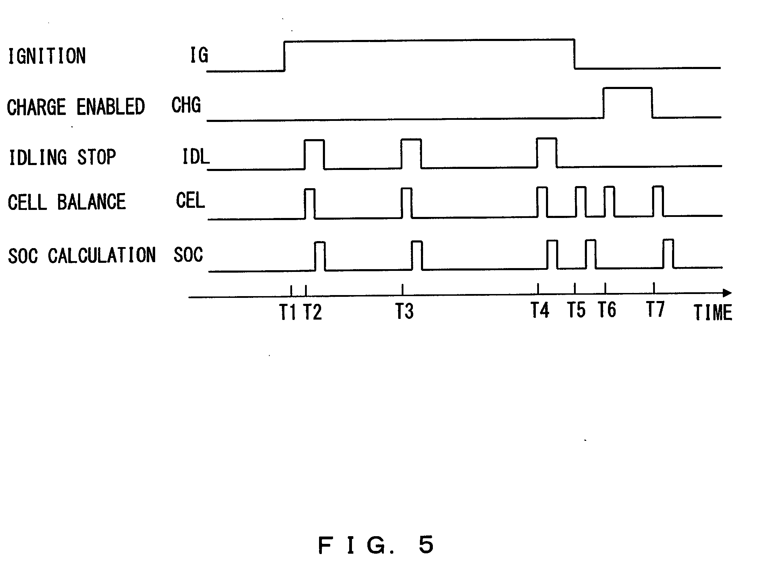

FIG. 5 is a timing chart of an example of executing cell balance control. In the timing chart, the high level of each signal indicates the ON state while the low level of each signal indicates the OFF state. In the embodiment, the ignition is switched from the OFF state to the ON state at time T1, and switched from the ON state to the OFF state at time T5. That is, in the period T1 through T5, the ignition turned-on state is maintained.

At time T2, it is assumed that a vehicle stops and the idling is stopped. That is, at time T2, the idling stop signal (IDL) changes from the OFF state to the ON state. When the ECU 7 detects the change of the idling stop signal from the OFF state to the ON state, it generates a pulse of the cell balance signal (CEL), thereby instructing the cell balance unit 4 to execute the cell balance control. Then, the cell balance unit 4 performs the cell balance control of equalizing the voltages of the battery cells 11-1 through 11-n. Afterwards, the ECU 7 calculates the remaining capacity of the battery 10. In FIG. 5, the process of the ECU 7 calculating the remaining capacity of the battery 10 is expressed as "SOC (state of charge) calculation". The idling stop state terminates, for example, when a user performs the operation of starting the drive of a vehicle.

At time T3 and T4, the idling is stopped. Then, the cell balance unit 4 performs the cell balance control of equalizing the voltages of the battery cells 11-1 through 11-n according to the instruction from the ECU 7 when the idling is stopped at time T3 and T4.

At time T5, the ignition is switched from the ON state to the OFF state by the operation of a user of a vehicle. That is, at time T5, the ignition signal (IG) is changed from the ON state to the OFF state. When the ECU 7 detects the change from the ON state to the OFF state of the ignition signal, it instructs the cell balance unit 4 to perform the cell balance control. Then, the cell balance unit 4 performs the cell balance control of equalizing the voltages of the battery cells 11-1 through 11-n as in the idling stopping process.

In the period T6 through T7, the battery 10 is charged by the power supplied from a charging station etc. That is, the charge enabled signal (CHG) is switched from the OFF state to the ON state at time T6, and from the ON state to the OFF state at time T7. When the ECU 7 detects the change (including the change from the OFF state to the ON state, and the change from the ON state to the OFF state) of the charge enabled signal, it instructs the cell balance unit 4 to perform the cell balance control. Then, the cell balance unit 4 performs the cell balance control of equalizing the voltages of the battery cells 11-1 through 11-n as in the idling stopping process.

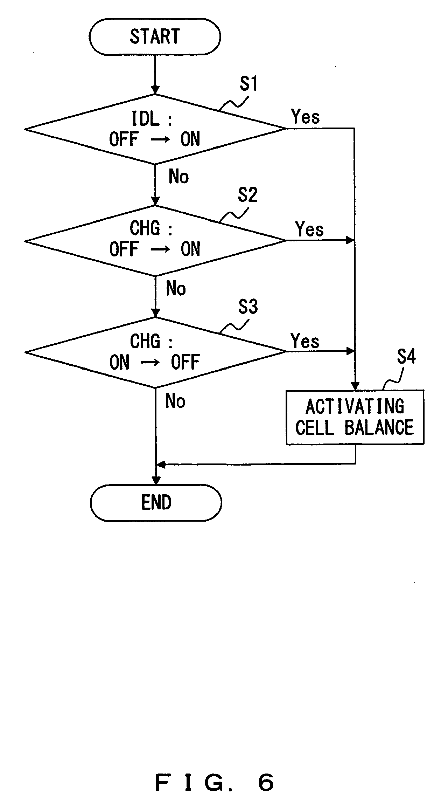

FIG. 6 is a flowchart of an example of the process of activating cell balance control. The process is performed by the ECU 7 when the status signal (in this case, the idling stop signal, the charge enabled signal, and the ignition signal) is changed. For example, the ECU 7 constantly monitors the status signal.

The ECU 7 determines in step S1 through S3 to which case the change of the status signal corresponds.
(1) Idling stop signal: changing from the OFF state to the ON state (step S1)
(2) Charge enabled signal: changing from the OFF state to the ON state (step S2)
(3) Charge enabled signal: changing from the ON state to the OFF state (step S3)

When the change of the status signal corresponds to one of the cases (1) through (3) above, the ECU 7 instructs the cell balance unit 4 to activate the cell balance control in step S4. That is, when the idling stop state of a vehicle is started, when the charging operation of the battery 10 is started, or when the charging operation of the battery 10 is terminated, an instruction to activate the cell balance control is issued to the cell balance unit 4. Thus, the ECU 7 operates as a control unit for allowing the cell balance unit 4 to equalize the battery cells 11-1 through 11-n.

In the embodiment illustrated in FIG. 6, the cell balance control is activated when one of the three events above occurs, but the present invention is not limited to this condition. That is, the cell balance control can be activated when another event occurs. For example, the cell balance control can be activated when the ignition is changed from the ON state to the OFF state.

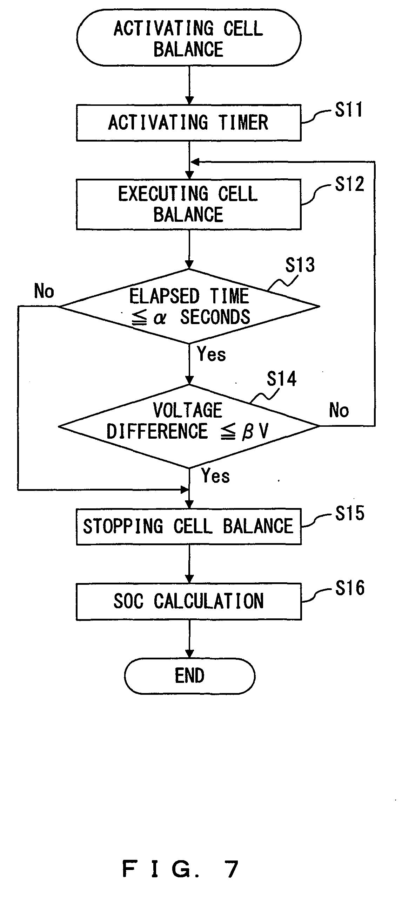

FIG. 7 is a flowchart of the process of cell balance control. The process is performed when the ECU 7 issues an instruction to activate the cell balance control.

In step S11, the cell balance control unit 5 activates a timer. The timer counts the execution time of the cell balance control.

In steps S12 through S14, the cell balance control unit 5 performs the cell balance control using the cell balance circuit 6. When the cell balance circuit 6 has the configuration illustrated in FIG. 2, the equalization illustrated in FIG. 4B is performed. When the cell balance circuit 6 has the configuration illustrated in FIG. 3, the equalization illustrated in FIG. 4C is performed.

If the timer activated in step S11 counts the elapsed time of α (seconds), the cell balance unit 4 stops the cell balance control in step S15. That is, in this embodiment, the cell balance unit 4 stops the cell balance control when the time α has passed even before the voltages of the battery cells 11-1 through 11-n are sufficiently equalized. In addition, even before the elapsed time has reached α (seconds), the cell balance unit 4 stops the cell balance control in step S15 if the difference among the voltages of the battery cells 11-1 through 11-n converges within β (V). Afterwards, the ECU 7 calculates the remaining capacity of the battery 10 in step S16.

As described above, in the cell balance controlling method according to the embodiment of the present invention, the voltages of the battery cells 11-1 through 11-n are equalized when the idling is stopped, and the charging is started and terminated. That is, as compared with the prior art, the frequency of equalizing the voltages of the battery cells 11-1 through 11-n is higher. Therefore, the degradation of the battery cells 11-1 through 11-n can be reduced.

Although not described in the flowchart in FIGS. 6 and 7, the ECU 7 can generate an instruction to stop the cell balance control when the idling stop is terminated (for example, when a user starts driving the vehicle, and a current is supplied from the battery 10 to the motor not illustrated in the attached drawings, etc.). In this case, the cell balance unit 4 stops the cell balance control although the process of the flowchart in FIG. 7 has not been completed.

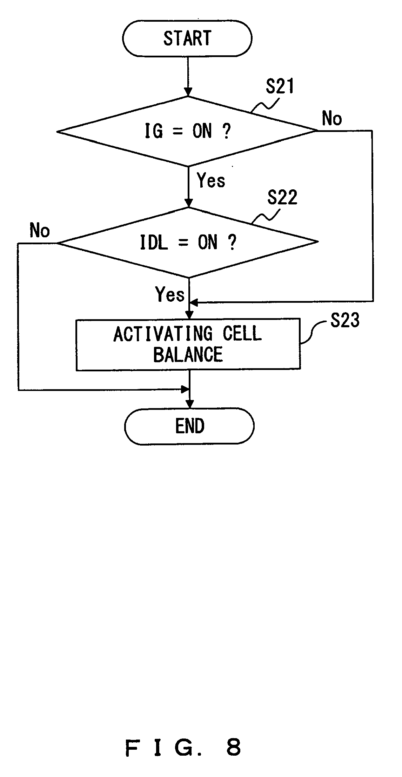

FIG. 8 is a flowchart of another example of the process of cell balance control. The process is periodically performed by the ECU 7.

In step S21, the ECU 7 determines whether or not the ignition signal is in the ON state. If the ignition signal is in the ON state, the ECU 7 determines in step S22 whether or not the idling stop signal is in the ON state. When the idling stop signal is in the ON state, the ECU 7 instructs the cell balance unit 4 to activate the cell balance control in step S23. Also when the ignition signal is in the OFF state, the ECU 7 instructs the cell balance unit 4 to activate the cell balance control. If the ignition signal is in the ON state, and the idling stop signal is in the OFF state, the cell balance control is not activated.

Thus, in the method illustrated in FIG. 8, the cell balance control is performed if the ignition signal is in the OFF state regardless of whether or not the battery 10 is being charged. The time required to perform the cell balance control can be made much shorter than the charging time by appropriately setting "α" illustrated in FIG. 7. Therefore, even when the battery 10 is being charged, the cell balance unit 4 can perform the cell balance control. The time required to perform the cell balance control can be made much shorter than the idling time by appropriately setting "α" illustrated in FIG. 7. Therefore, even in the idling stop state, the cell balance unit 4 can perform the cell balance control. The process of the flowchart illustrated in FIG. 8 is, for example, periodically performed. Therefore, when the ignition signal is in the OFF state, the cell balance control is periodically performed.

In the above-mentioned embodiment, the voltage sensors (3-1 through 3-n) are provided for the battery cells 11-1 through 11-n respectively, but one voltage sensor can be provided for a plurality of battery cells. In this case, the voltage sensor sequentially detects the output voltages of a plurality of battery cells in, for example, the time sharing system.

In addition, in the above-mentioned embodiment, the cell balance control unit 5 is provided in the cell balance unit 4, but the present invention is not limited to this configuration. That is, the cell balance control unit 5 can also be provided in, for example, the ECU 7.

According to the present invention, when a battery including a plurality of serially connected chargeable battery cells are loaded into a mobile object, the number of opportunities of equalizing the battery cells can be increased. Thus, the variance of the voltages or remaining capacities of battery cells can be suppressed, and the degradation of the battery cells can be prevented.

A cell balance control device includes a battery monitor unit (2, 3-1 ∼ 3-n), a cell balance unit (4), and an ECU (7), and equalizes serially connected chargeable battery cells (11-1 ∼ 11-n) in a battery loaded into a vehicle. The battery monitor unit (2, 3-1 ∼ 3-n) detects the voltage of each battery cell (11-1 ∼ 11-n). The cell balance unit (4) equalizes the voltages of the plurality of battery cells (11-1 ∼ 11-n) based on the voltage of each battery cell (11-1 ∼ 11-n) detected by the battery monitor unit (2, 3-1 ∼ 3-n). At least one of the times when an idling stop state of the vehicle starts, when the charging operation of the battery starts, and when the charging operation of the battery terminates triggers the ECU (7) allowing the cell balance unit (4) to equalize the voltage of the plurality of battery cells.

## Claims

1. A cell balance control device **(1)** which is configured to equalize a plurality of serially connected chargeable battery cells **(11-1 to 11-n)** in a battery **(10)** loaded into a vehicle, comprising:
a voltage detection unit **(3-1 to 3-n)** configured to detect a voltage of each battery cell **(11-1 to 11-n);**
a cell balance unit (4) configured to equalize the voltages of the plurality of battery cells **(11-1 to 11-n)** based on the voltage of each battery cell **(11-1 to 11-n)** detected by the voltage detection unit **(3-1 to 3-n);** and
a control unit **(7)** configured to allow the cell balance unit **(4)** to equalize the voltages of the plurality of battery cells **(11-1 to 11-n),**
when an ignition of the vehicle is in the ON state and when the vehicle is in an idling stop state, the control unit **(7)** is configured to allow the cell balance unit **(4)** to equalize the voltages of the plurality of battery cells **(11-1 to 11-n), characterized in that**
when a predefined time period after the cell balance unit **(4)** has started to equalize voltages has elapsed even before the voltages of the plurality of battery cells are equalized and before the idling stop state ends, the cell balance unit **(4)** is confugured to stop equalizing the voltages of the plurality of battery cells **(11-1 to 11-n).**

## Patentansprüche

1. Zellenausgleichsvorrichtung **(1),** die eingerichtet ist, eine Vielzahl von in Reihe geschalteten ladbaren Batteriezellen **(11-1 bis 11-n)** in einer Batterie **(10)** zu laden, die in einem Fahrzeug untergebracht ist, mit
einer Spannungserfassungseinheit **(3-1 bis 3-n),** die eingerichtet ist, eine Spannung jeder Batteriezelle **(11-1 bis 11-n)** zu erfassen,
einer Zellenausgleichseinheit **(4),** die eingerichtet ist, die Spannungen der Vielzahl der Batteriezellen **(11-1 bis 11-n) auf** der Grundlage der durch die Spannungserfassungseinheit **(3-1 bis 3-n)** erfassten Spannung jeder Batteriezelle **(11-1 bis 11-n)** anzugleichen, und
einer Steuerungseinheit **(7),** die eingerichtet ist, zu ermöglichen, dass die Zellenausgleichseinheit **(4)** die Spannungen der Vielzahl der Batteriezellen **(11-1 bis 11-n)** angleicht,
wobei, wenn eine Zündung des Fahrzeugs sich in dem Ein-Zustand befindet und wenn das Fahrzeug sich in einem Leerlaufstoppzustand befindet, die Steuerungseinheit **(7)** eingerichtet ist, zu ermöglichen, dass die Zellenausgleichseinheit **(4)** die Spannungen der Vielzahl der Batteriezellen **(11-1 bis 11-n)** angleicht,
**dadurch gekennzeichnet, dass**
die Zellenausgleichseinheit **(4)** konfiguriert ist, ein Angleichen der Spannungen der Vielzahl der Batteriezellen **(11-1 bis 11-n)** zu stoppen, wenn eine vordefinierte Zeitdauer verstrichen ist, nachdem die Zellenausgleichseinheit **(4)** das Angleichen der Spannungen gestartet hat, selbst bevor die Spannungen der Vielzahl der Batteriezellen angeglichen sind und bevor der Leerlaufstopp endet.

## Revendications

1. Dispositif de commande de l'équilibre cellulaire (1) qui est configuré pour égaliser une pluralité de cellules de batterie rechargeable reliées en série (11-1 à 11-n) dans une batterie (10) embarquée dans un véhicule, comprenant :
une unité de détection de tension (3-1 à 3-n) configurée pour détecter une tension de chaque cellule de batterie (11-1 à 11-n) ;
une unité d'équilibre cellulaire (4) configurée pour égaliser les tensions de la pluralité de cellules de batterie (11-1 à 11-n) sur la base du voltage de chaque cellule de batterie (11-1 à 11-n) détectée par l'unité de détection de tension (3-1 à 3-n) ; et
une unité de commande (7) configurée pour permettre à l'unité d'équilibre cellulaire (4) d'égaliser les tensions de la pluralité de cellules de batterie (11-1 à 11-n),
**caractérisé en ce que**
lorsqu'un contact du véhicule est dans un état allumé et lorsque le véhicule est dans un état d'arrêt de ralenti, l'unité de commande (7) est configurée pour permettre à l'unité d'équilibre cellulaire (4) d'égaliser les tensions de la pluralité de cellules de batterie (11-1 à 11-n),
**caractérisé en ce que**
lorsqu'une période de temps prédéfinie après que l'unité d'équilibre cellulaire (4) a commencé à égaliser les tensions s'est écoulée avant même que les tensions de la pluralité de cellules de batterie soient égalisées et avant que l'état d'arrêt de ralenti soit fini, l'unité d'équilibre cellulaire (4) est configurée pour arrêter d'égaliser les tensions de la pluralité de cellules de batterie (11-1 à 11-n).
